# EUROPÄISCHE PATENTSCHRIFT

(11) **EP 3 088 248 B1**
(45) Veröffentlichungstag und Bekanntmachung des Hinweises auf die Patenterteilung: **02.04.2025**
(21) Anmeldenummer: 16166668.0
(22) Anmeldetag: 22.04.2016
(51) Int. Cl.: B60Q 1/08, F21S 41/153, F21S 41/663

(54) **VERFAHREN ZUM BETREIBEN EINER BELEUCHTUNGSEINRICHTUNG EINES KRAFTFAHRZEUGS UND BELEUCHTUNGSEINRICHTUNG FÜR EIN KRAFTFAHRZEUG**
METHOD FOR OPERATING A LIGHTING DEVICE OF A MOTOR VEHICLE AND LIGHTING DEVICE FOR A MOTOR VEHICLE
PROCEDE DESTINE AU FONCTIONNEMENT D'UN DISPOSITIF D'ECLAIRAGE D'UN VEHICULE AUTOMOBILE ET DISPOSITIF D'ECLAIRAGE POUR UN VEHICULE AUTOMOBILE

(30) Priorität: 29.04.2015 DE 102015005568
(43) Veröffentlichungstag der Anmeldung: 02.11.2016
(73) Patentinhaber: AUDI AG, 85045 Ingolstadt (DE)
(72) Erfinder: Kaup, Markus, 74906 Bad Rappenau (DE); Hamm, Michael, 72800 Eningen (DE)
(74) Vertreter: Hofstetter, Schurack & Partner

(56) Entgegenhaltungen:
- EP-A1- 2 261 081
- EP-A2- 2 548 768
- WO-A1-2009/074671
- WO-A1-2012/035392
- DE-A1- 102005 041 234
- DE-A1- 102006 017 855
- DE-A1- 102006 048 503
- DE-A1- 102009 009 472
- DE-A1- 102009 021 018
- DE-A1- 102009 051 485
- DE-A1- 102011 078 288
- DE-A1- 102011 118 675
- DE-A1- 102011 119 923

## Beschreibung

Die Erfindung geht aus von einem Verfahren zum Betreiben einer Beleuchtungseinrichtung eines Kraftfahrzeugs gemäß dem Oberbegriff des Patentanspruchs 1 und einer Beleuchtungseinrichtung für ein Kraftfahrzeug gemäß dem Oberbegriff des Patentanspruchs 10.

Aus dem Stand der Technik sind Beleuchtungseinrichtungen für Kraftfahrzeuge, insbesondere Scheinwerfer, bekannt, welche mehrere LED-Lichtquellen aufweisen können und die durch gezielte Ansteuerung einzelner LEDs beziehungsweise LED-Gruppen, die durch den Scheinwerfer erzeugte Beleuchtungsstärkeverteilung ändern können.

Die DE 10 2008 062 640 A1 beschreibt beispielsweise einen Fahrzeugscheinwerfer mit einer Mehrzahl von LED-Lichtquellen, wobei für den Scheinwerfer verschiedene Lichtverteilungen in einen Speicher abgelegt sind und eine jeweilige Lichtverteilung in Abhängigkeit von mindestens einem empfangenen Parameter ausgewählt wird. Diese Parameter können von einer Umfeldsensorik des Kraftfahrzeugs erfasst werden, wobei die Lichtverteilungen beispielsweise eine Kurvenlichtfunktion bereitstellen oder für die Ausführung eines Blendschutzes für erkannte Verkehrsteilnehmern dienen können.

Auch die DE 10 2005 041 234 A1 beschreibt einen Scheinwerfer für Fahrzeuge, der ebenfalls zur Erzeugung verschiedener Lichtverteilungen ausgelegt ist. Dieser Scheinwerfer ermöglicht es beispielsweise auch, in einem vor dem Fahrzeug liegenden Verkehrsraum detektierte Objekte, die eine potentielle Gefahr darstellen, durch entsprechende Ansteuerung der LED-Lichtquellen optisch hervorzuheben.

Die oben genannten Ausführungen beziehen sich dabei auf verschiedene Beleuchtungsstärkeverteilungen, die im Rahmen der Fernlichtfunktion des Kraftfahrzeugs umgesetzt werden. Dies ist vor allem für eine frühzeitige Objektdetektion, vorausschauendes Fahren und zur Blendungsvermeidung durch Fernlicht sinnvoll. Es gibt jedoch auch vielzählige andere Situationen, in welchen geeignete Anpassungsmöglichkeiten des Scheinwerferlichts vorteilhaft wären.

Die WO 2009/074671 A1 offenbart ein Verfahren zum Anpassen eines Fahrzeugs mit einer Assistenzeinrichtung, wobei ein Fahrhinweis erzeugt wird, der ein von dem Fahrzeugbediener durchzuführendes Fahrmanöver betrifft. Dabei wird nach Maßgabe des Fahrhinweises eine von der Beleuchtungseinrichtung des Fahrzeugs erzeugte Lichtverteilung angepasst. Die Beleuchtungseinrichtung kann dabei als Lichtquelle ein Feld von in einer Matrix angeordneten Leuchtdioden aufweisen, die einzeln schaltbar sind, um die Lichtverteilung zu verändern. Bei den Fahrhinweisen handelt es sich insbesondere um zum Beispiel von einem Navigationssystem des Kraftfahrzeugs erzeugte Navigationshinweise.

Die DE 10 2009 051 485 A1 beschreibt ein Verfahren zur Steuerung eines Fahrlichts eines Fahrzeugs, wobei eine Lichtverteilung des Scheinwerfers derart eingestellt wird, dass eine optische Achse der Lichtverteilung auf ein als Gefahrenpunkt erkanntes Objekt gerichtet wird. Entsprechend wird die Beleuchtungsstärkeverteilung in Abhängigkeit von der Position eines erkannten Objekts geändert.

Die WO 2012/035392 beschreibt eine Scheinwerfereinrichtung und ein Verfahren zum Steuern der Helligkeit für ein Fahrzeug mit LEDs als Lichtquelle. Die Scheinwerfereinrichtung kann bestimmen, ob die Helligkeit der Scheinwerfer eines Fahrzeugs zu dimmen sind.

Die EP 2 261 081 A1 beschreibt ein Verfahren zur Steuerung der Leistung einer Beleuchtungseinrichtung für ein Kraftfahrzeug, mit dessen Hilfe bei der Fahrt die Leistung eines Abblendlichts während der Fahrt durch eine geschlossene Ortschaft deutlich reduziert werden kann.

Die DE 10 2009 009 472 A1 beschreibt ein Verfahren zum Unterstützen eines Fahrers eines Fahrzeugs und ein Assistenzsystem für ein Fahrzeug, bei dem Objekte im Umfeld des Fahrzeugs detektiert werden, analysiert wird, ob ein detektiertes Objekt eine Kollisionsgefahr für das Fahrzeug darstellt, und eine Lichtemission erzeugt wird, die dem Fahrer eine Fahrtrichtung zur Verringerung der Kollisionsgefahr weist.

Die DE 10 2011 118 675 A1 beschreibt ein Kraftfahrzeug mit mindestens zwei Fahrzeugleuchtkörpern, welche eine Vielzahl von Leuchtmitteln und eine Steuerung, zum Aktivieren der Vielzahl der Leuchtmittel, aufweisen. Eine elektrische Kontrolleinheit kann als Reaktion auf ein Signal die Steuerungen der mindestens zwei Fahrzeugleuchtkörper dazu anleiten, sequentiell jeweils mindestens ein Teil der Vielzahl von Leuchtmitteln zu aktivieren.

Die DE 10 2009 021 018 A1 beschreibt ein Verfahren zum Betreiben eines Fahrzeugscheinwerfers, der dem Bereitstellen mindestens einer Lichtfunktion dient, wobei an dem Bereitstellen der oder jeder Lichtfunktion mindestens eine Teillichtquelle des Fahrzeugs derart beteiligt ist, dass die oder jede Teillichtquelle mit einer einstellbaren Leistung betrieben wird.

Die DE 10 2006 017 855 A1 beschreibt ein Verfahren und eine Vorrichtung zum Gewinnen von situationsabhängigen Kontextdaten in einem Fahrzeug.

Aufgabe der vorliegenden Erfindung ist es, ein Verfahren zum Betreiben einer Beleuchtungseinrichtung eines Kraftfahrzeugs und eine Beleuchtungseinrichtung für ein Kraftfahrzeug bereitzustellen, welche weitere Einsatzmöglichkeiten von LED-Scheinwerfer aufzeigen.

Diese Aufgabe wird gelöst durch ein Verfahren zum Betreiben einer Beleuchtungseinrichtung sowie durch eine Beleuchtungseinrichtung für ein Kraftfahrzeug gemäß den unabhängigen Ansprüchen. Vorteilhafte Ausgestaltungen der Erfindung finden sich in den abhängigen Ansprüchen.

Bei dem erfindungsgemäßen Verfahren zum Betreiben einer Beleuchtungseinrichtung eines Kraftfahrzeugs weist die Beleuchtungseinrichtung eine Mehrzahl an Halbleiterlichtquellen, zum Beispiel LEDs, und eine Steuereinrichtung zum Ansteuern der Halbleiterlichtquellen auf. Weiterhin ist die Beleuchtungseinrichtung dazu ausgelegt, ein Vorfeld des Kraftfahrzeugs zumindest in einem vorbestimmten Nahbereich mit einer vorbestimmten ersten Beleuchtungsstärkeverteilung zu beleuchten, wobei die Beleuchtungseinrichtung weiterhin dazu ausgelegt ist, ein Abblendlicht bereitzustellen, das sich in einer Fahrzeuglängsrichtung genauso weit oder weiter erstreckt als der Nahbereich.

Beim erfindungsgemäßen Verfahren erfasst die Steuereinrichtung automatisch einen Parameter und ändert in Abhängigkeit von dem erfassten Parameter durch Ansteuerung der Halbleiterlichtquellen die erste Beleuchtungsstärkeverteilung zumindest im Nahbereich in zumindest eine zweite Beleuchtungsstärkeverteilung. Dabei betrifft der Parameter einen Zustand und/oder eine Zustandsänderung mindestens einer von der Beleuchtungseinrichtung verschiedenen Komponente des Kraftfahrzeugs, wobei die Komponente ein Fahrerassistenzsystem des Kraftfahrzeugs darstellt, wobei als der Parameter eine Aktivierung und/oder Deaktivierung des Fahrerassistenzsystem erfasst wird, wobei das Fahrerassistenzsystem einen Spurhalteassistenten darstellt, und wobei ein Lichtbild, das durch die Änderung der Beleuchtungsstärkeverteilung erzeugt wird, gezielt Bereiche

in Form einer seitlichen Betonung der Markierungsstreifen hervorhebt.

Der Nahbereich definiert hierbei also einen Bereich vor dem Kraftfahrzeug, der sich maximal bis zu einer Reichweite des Abblendlichts erstreckt. Der Nahbereich kann zum Beispiel bis maximal 30 m oder maximal 25 m vor dem Kraftfahrzeug liegen. Die Erfindung beruht dabei auf der Erkenntnis, dass es gerade im Nahbereich des Kraftfahrzeugvorfeldes vielzählige Anwendungsmöglichkeiten gibt, in welchen eine Änderung der Beleuchtungsstärkeverteilung eine besonders gute Situationsanpassung ermöglicht. Dagegen liegt im Stand der Technik der Anwendungsschwerpunkt auf den Fernlichtbereich was die Einsatzmöglichkeiten schon daher einschränkt, dass auf andere Verkehrsteilnehmer wegen einer möglichen Blendungsgefahr geachtet werden muss. Dagegen bietet die Erfindung nun auch ganz andere Einsatzmöglichkeiten. Über eine optimale Ausleuchtung der Fahrbahn hinausgehend ermöglicht es die Erfindung nämlich durch die Änderung der Beleuchtungsstärkeverteilung im Nahbereich auch Funktionen wie zum Beispiel das Ausgeben von Warnungen, Hinweisen, eines optischen Feedbacks sowie Energiesparmaßnahmen umzusetzen.

Das Vorsehen der Beleuchtungsstärkeänderung im Nahbereich hat damit den besonders großen Vorteil, dass sich dadurch vielzählige verschiedene nützliche weitere Funktionen umsetzen lassen, ohne Gefahr zu laufen, dadurch andere Verkehrsteilnehmer zu blenden oder zu irritieren. Die Variationsvielfalt an Einsatzmöglichkeiten kann dadurch deutlich gesteigert werden. Dies erlaubt es erst, die vielfältigen Möglichkeiten der Beleuchtungsstärkeverteilungen, die durch die separate Ansteuerbarkeit der einzelnen Halbleiterlichtquellen, insbesondere der einzelnen LEDs, gegeben sind, nicht nur für eine optimale Ausleuchtung der Fahrbahn auch im Nahbereich zu nutzen, sondern auch für die Ausgabe optischer Warnhinweise bzw. Warnsignale und Feedbacks für Bedienhandlungen zu nutzen. Damit erhöht die Erfindung deutlich die Flexibilität und Einsatzmöglichkeiten von Scheinwerfern mit Halbleiterlichtquellen.

Die Änderung der Beleuchtungsstärkeverteilung kann auch vollständig auf den Nahbereich beschränkt sein, so dass dadurch sichergestellt ist, dass andere Verkehrsteilnehmer davon unbeeinflusst bleiben. Beispielsweise kann die erste und zweite Beleuchtungsstärkeverteilung im Nahbereich mittels eines dem Abblendlicht des Kraftfahrzeugs zugeordneten separaten Moduls der Beleuchtungseinrichtung umgesetzt sein. Insbesondere kann die Beleuchtungseinrichtung ein Modul für das Abblendlicht, für das Fernlicht, und z.B. auch für ein Abbiegelicht aufweisen, wobei die oben beschriebenen und im Folgenden beschriebenen Funktionen bevorzugt durch das Modul für das Abblendlicht, also im Abblendlichtbereich oder einem kleineren Bereich vor dem Fahrzeug, umgesetzt werden.

Erfindungsgemäß wird als der Parameter eine Aktivierung und/oder Deaktivierung des Systems erfasst wird. Dadurch kann dem Fahrer durch eine Änderung der Beleuchtungsstärkeverteilung ein optisches Feedback über die Aktivierung des betreffenden Systems ausgegeben werden. Bei der Aktivierung von Fahrerassistenzsystemen kann durch ein jeweiliges Hoch- beziehungsweise Herunterdimmen der LEDs, zum Beispiel in einer vorbestimmten zeitlichen Abfolge bzw. Sequenz, dem Fahrer signalisiert werden, dass das System aktiv ist. Dies lässt sich zum einen bei Situationen während der Fahrt vorteilhafterweise nutzen, indem das Lichtbild, das durch die Änderung der Beleuchtungsstärkeverteilung erzeugt wird, gezielt die Bereiche hervorhebt, in denen das Assistenzsystem aktiv ist, in Form einer seitlichen Betonung der Markierungsstreifen beim Spurhalteassistenten. Aber auch in Situationen, in welchen der Fahrer nicht im Fahrzeug sitzt, kann diese Ausgestaltung vorteilhaft genutzt werden, zum Beispiel beim autonomen Einparken, wobei die Änderung der Beleuchtungsstärkeverteilung z.B. derart bewirkt werden kann, dass sich ein "Scaneffekt" durch Verschieben des Lichtschwerpunkts ergibt. Auch hierdurch kann dem Fahrer bzw. Benutzer die Bereitschaft bzw. Aktivität des betreffenden Systems des Kraftfahrzeugs signalisiert werden.

In einer vorteilhaften Ausgestaltung der Erfindung kann ein weiterer Parameter einen unabhängig von einem Umfeld des Kraftfahrzeugs erfassten Parameter darstellen. Beispielsweise betrifft der Parameter einen Zustand und/oder eine Zustandsänderung mindestens einer von der Beleuchtungseinrichtung verschiedenen Komponente des Kraftfahrzeugs. Diese Zustände können beispielsweise einen allgemeinen Zustand des Kraftfahrzeugs selbst darstellen und/oder sich auf einen Fahrzustand des Kraftfahrzeugs und/oder einen Betriebszustand des Kraftfahrzeugs oder einer seiner Komponenten beziehen. Dadurch wird es vorteilhafterweise ermöglicht, dem Benutzer beziehungsweise Fahrer durch die Änderung der Beleuchtungsstärkeverteilung über einen jeweiligen Zustand zu informieren. Auch kritische Fahrzustände oder Betriebszustände lassen sich durch die Änderung der Beleuchtungsstärkeverteilung optisch signalisieren. Diese optische Signalisierung tritt durch die Beleuchtungsstärkeverteilungsänderung im Nahbereich genau da auf, wo der Fahrer üblicherweise auch seinen Blick während der Fahrt hinwendet, nämlich, auf die direkt vor ihm liegende Fahrbahn. Gerade Warnungen und Hinweise können damit dem Fahrer auf besonders signifikante und unübersehbare Weise vermittelt werden.

Die Komponente kann beispielsweise ein Lenksystem des Kraftfahrzeugs darstellen, wobei als der weitere Parameter ein Lenkwinkel des Lenksystems erfasst wird. Dies kann vorteilhafter Weise dazu genutzt werden, bei einer Kurvenfahrt den Lichtschwerpunkt in Kurvenrichtung, zum Beispiel horizontal, zu verschieben. Dazu können die LEDs der Beleuchtungseinrichtung in der gewünschten Richtung stärker bestromt werden, zum Beispiel im Bereich von 105% bis 200% gegenüber einer Normalbestromung, vorzugsweise zwischen 120% und 150%. Weiterhin können auch die LEDs der Beleuchtungseinrichtung, die nicht in die gewünschte Richtung leuchten, gleich beziehungsweise niedriger bestromt werden, zum Beispiel im Bereich zwischen 20 und 99 %, vorzugsweise 50% bis 90% gegenüber einer Normalbestromung. Es kann also vorgesehen sein, dass im Zuge dieser Kurvenlichtfunktion nicht nur die erste Beleuchtungsstärkeverteilung als Ganzes horizontal verschoben wird, sondern dass auch die Verteilung bzw. Intensitätsverlauf der Beleuchtungsstärke über diesen ganzen Bereich variiert wird. Mit anderen Worten wird nicht nur der ausgeleuchtete Bereich verschoben, sondern auch die Lichtverteilung innerhalb dieses Bereichs in Abhängigkeit des erfassten Lenkwinkels geändert, so dass die Änderung der Beleuchtungsstärkeverteilung keine rein translatorische Verschiebung der ersten Beleuchtungsstärkeverteilung betrifft. Dies ergibt eine wesentlich bessere optische Führung des Fahrerauges und verbessert die Verkehrssicherheit. Gerade bei sehr engen Kurven ist es besonders vorteilhaft, eine derartige Änderung der Beleuchtungsstärkeverteilung im Nahbereich vorzunehmen. Zudem stellt der Lenkwinkel als Parameter gerade im Nahbereich eine besonders geeignete Größe dar, um auf den unmittelbar vorausliegenden Fahrbahnverlauf schließen zu können. Bei engen Kurven können die LEDs der Beleuchtungseinrichtung, die ein Abbiegelicht bilden, ebenfalls sequentiell lenkwinkelgesteuert angesteuert beziehungsweise hochgedimmt werden beziehungsweise nach einer vorgegebenen Animationsreihenfolge eingeschaltet und hochgedimmt werden. Damit lassen sich vorteilhafterweise sehr große Bereiche vor dem Kraftfahrzeug, insbesondere auch in einer Richtung, die mit der Fahrzeuglängsachse bis zu 90° einschließen, ausleuchten, und dadurch eine besonders gute Anpassung an Kurvenfahrten realisieren.

Darüber hinaus können auch Navigationsdaten als weitere Parameter herangezogen werden, um die Funktion des Kurvenlichts zu ergänzen. Wird beispielsweise durch die Navigationsdaten eine sehr kurvenreiche Route mit vielen kurz aufeinanderfolgenden, engen Kurven ermittelt, so kann zusätzlich zur lenkwinkelabhängigen Steuerung der Beleuchtungsstärkeverteilung eine Verbreiterung des ausgeleuchteten Bereichs erfolgen, insbesondere so dass die vielen aufeinanderfolgenden Kurven deutlich besser sichtbar sind und auch mehrere aufeinanderfolgende Kurven gleichzeitig beleuchtet werden können. Es kann auch vorgesehen sein, dass z.B. der Lichtschwerpunkt der Beleuchtungsstärkeverteilung in Abhängigkeit von dem aktuell erfassten Lenkwinkel gesteuert wird, während gleichzeitig eine Breite der Beleuchtungsstärkeverteilung, insbesondere in horizontaler Richtung in Abhängigkeit von den erfassten Navigationsdaten gesteuert werden kann. Es ist also auch denkbar, dass eine erste Größe der Beleuchtungsstärkeverteilung, z.B. der Lichtschwerpunkt, in Abhängigkeit von einem ersten erfassten Parameter gesteuert wird und eine zweite, insbesondere auch dritte, vierte usw., Größe der Beleuchtungsstärkeverteilung, z.B. die Abmessung in horizontaler Richtung, in Fahrzeuglängsrichtung, die Gesamtbeleuchtungsintensität, der Intensitätsverlauf innerhalb des ausgeleuchteten Bereichs usw., in Abhängigkeit von einem zweiten, insbesondere auch dritten, vierten, usw., Parameter gesteuert wird. Damit lassen sich besonders gute Anpassungsmöglichkeiten an vielzählige unterschiedliche Situationen realisieren.

In einer weiteren vorteilhaften Ausgestaltung der Erfindung kann die Komponente auch ein Verriegelungssystem des Kraftfahrzeugs für ein Ent- und Verriegeln von Türen des Kraftfahrzeugs darstellen, wobei als ein weiterer Parameter ein Ver- und/oder Entriegeln des Kraftfahrzeugs erfasst wird. Auch hier kann durch die Änderung der Beleuchtungsstärkeverteilung eine optische Feedbackfunktion umgesetzt werden. Beispielsweise kann, wenn ein Entriegeln des Kraftfahrzeugs durch den Fahrer detektiert wird, durch das Hochbeziehungsweise Herunterdimmen der LEDs eine Sequenz ablaufen, die es dem Fahrer schneller ermöglicht, sein Fahrzeug zu erkennen. Dies ist insbesondere dann besonders vorteilhaft, wenn das Fahrzeug auf einem großen Parkplatz mit mehreren anderen Fahrzeugen geparkt ist. Auch kann eine derartige Sequenz durch Hoch- beziehungsweise Herunterdimmen einzelner oder aller LEDs ablaufen, wenn der Fahrer das Kraftfahrzeug verriegelt, um diesem ein Feedback darüber zu geben, dass sein Fahrzeug ordnungsgemäß verschlossen ist. Auch ist es denkbar, dass das Kraftfahrzeug detektiert, wenn der Fahrer das Fahrzeug verlässt, ohne es zu verriegeln, woraufhin ebenfalls durch die Beleuchtungseinrichtung ein entsprechendes Lichtsignal durch Änderung der Beleuchtungsstärkeverteilung ausgegeben werden kann, um den Fahrer darauf hinzuweisen, dass das Kraftfahrzeug nicht verriegelt ist. Auch hierbei sind vielzählige weitere Ausgestaltungen denkbar, bei welchen die Änderung der Beleuchtungsstärkeverteilung als optisches Feedback genutzt werden kann.

Darüber hinaus kann die Komponente auch einen Motor des Kraftfahrzeugs darstellen, wobei als der weitere Parameter ein Starten und/oder Abschalten des Motors erfasst wird. Wird beispielsweise ein Starten des Motors als Erststart bzw. ein manueller Start des Kraftfahrzeug erfasst, so kann durch eine Änderung der Beleuchtungsstärkeverteilung, insbesondere wieder durch Hoch- beziehungsweise Herunterdimmen der LEDs in einer vorbestimmten Abfolge oder einem vorbestimmten Muster, ein Einschalteffekt erzeugt werden, der dem Fahrer signalisiert, dass sein Beleuchtungssystem betriebsbereit und aktiviert ist. Wird darüber hinaus ein Starten beziehungsweise Abschalten des Motors im Rahmen eines Start-Stopp-Betriebs des Kraftfahrzeugs detektiert, kann beispielsweise bei einer Detektion des Motorstopps eine Änderung der Beleuchtungsstärkeverteilung derart erfolgen, dass die LEDs heruntergedimmt werden bis zum nächsten detektierten Start des Motors. Dadurch kann im Start-Stopp-Betrieb vorteilhafterweise Energie gespart werden.

Des Weiteren kann die Komponente auch ein Antriebssystem des Kraftfahrzeugs darstellen, wobei als der weitere Parameter eine Geschwindigkeit des Kraftfahrzeugs erfasst wird. Vorteilhafterweise lässt es sich damit zum Beispiel umsetzen, dass beim Überschreiten einer bestimmten Geschwindigkeitsschwelle, z.B. einer vom Kraftfahrzeug oder dem Navigationssystem erfassten, aktuellen zulässigen Höchstgeschwindigkeit, z.B. 50 km/h innerorts, der Fahrer visuell über eine Dimmsequenz der LEDs informiert bzw. gewarnt wird.

Bei einer weiteren vorteilhaften Ausgestaltung der Erfindung stellt ein weiterer Parameter einen ein Umfeld des Kraftfahrzeugs betreffenden und durch ein Erfassungsmittel des Kraftfahrzeugs automatisch ermittelten Parameter dar, insbesondere wobei die Ermittlung des weiteren Parameters zumindest während einer Fahrt des Kraftfahrzeugs in vorbestimmten Zeitabständen wiederholt stattfindet. Auf diese Weise lässt sich vorteilhafterweise eine an sich ändernde Umfeldgegebenheiten anpassende dynamische Beleuchtungsstärkeverteilung bereitstellen.

Dabei ist es eine vorteilhafte Ausgestaltung der Erfindung, dass ein Erfassungsmittel des Kraftfahrzeugs erfasst, wenn sich ein anderes Kraftfahrzeug im Nahbereich des Kraftfahrzeugs befindet, wobei das Erfassungsmittel, wenn sich ein anderes Kraftfahrzeug im Nahbereich des Kraftfahrzeugs befindet, eine Position des anderen Kraftfahrzeugs in Bezug auf das Kraftfahrzeug ermittelt, wobei die Position des anderen Kraftfahrzeugs an die Steuereinrichtung als der weitere Parameter übermittelt wird.

Vorteilhafterweise kann so beispielsweise die Beleuchtungsstärke in Richtung direkt vorausfahrender Fahrzeuge gezielt modifiziert werden. Beispielsweise kann die Beleuchtungsstärkeverteilung derart geändert werden, dass diese in Richtung des detektierten Fahrzeugs gezielt reduziert wird, während andere Bereiche stärker ausgeleuchtet werden. Damit lässt sich eine Blendungsvermeidung von Fahrern auch im Nahbereich und im Zusammenhang mit dem Abblendlicht umsetzen. Dabei können andere Kraftfahrzeuge wie beispielsweise mittels Radar oder Ultraschallsensoren des Kraftfahrzeugs erfasst werden. Derartige Erfassungsmittel sind gerade im Nahbereich des Kraftfahrzeugs besonders effektiv und genau. Darüber hinaus können auch andere Kraftfahrzeuge in einer vorbestimmten nahen Umgebung des Kraftfahrzeugs erfasst werden und geprüft werden, ob eine gefährliche Verkehrssituation vorliegt, z.B. wenn der Fahrer einen Blinker setzt, um zu überholen, während jedoch ein neben dem Kraftfahrzeug fahrendes anderes Kraftfahrzeug erfasst wird. Auch in einer solchen Situation kann die Steuereinrichtung die Beleuchtungseinrichtung ansteuern, um durch Änderung der Beleuchtungsstärkeverteilung ein optisches Warnsignal an den Fahrer auszugeben, insbesondere auch in Abhängigkeit von der Position des erfassten anderen Kraftfahrzeugs, z.B. eine erhöhte Beleuchtungsstärke in Richtung des anderen Kraftfahrzeugs, um den Fahrer auf dieses aufmerksam zu machen. Auch kann eine derartige Beleuchtungsstärkeänderung bewirkt werden, wenn detektiert wird, dass das Kraftfahrzeug einen zu geringen Abstand zum anderen Fahrzeug hat, und z.B. einen vorbestimmten Sicherheitsabstand unterschreitet. Auch dadurch kann der Fahrer vorteilhafterweise gewarnt und auf ein mögliches Sicherheitsrisiko aufmerksam gemacht werden, insbesondere speziell auf den Verkehrsteilnehmer bezogen, in Bezug zu dem das Risiko auftritt. Damit kann der Fahrer nicht nur schnell erkennen, dass eine Gefahr vorhanden ist, sondern auch was die Ursache der optischen Gefahrenwarnung ist.

Des Weiteren ist es auch denkbar, dass mittels eines Erfassungsmittels des Kraftfahrzeugs auch andere Kraftfahrzeuge, welche sich nicht im Nahbereich des Kraftfahrzeugs befinden, erfasst werden, z.B. weiter entfernte und entgegenkommende Fahrzeuge, und in Abhängigkeit der Position der detektierten anderen Kraftfahrzeuge eine Änderung der Beleuchtungsstärkeverteilung im Nahbereich des Kraftfahrzeugs erfolgt. Diese Vorgehensweise kann beispielsweise dazu genutzt werden, Fernlichtfunktionen in Form des Matrixbeams auch im Nahbereich D zu unterstützen. Dabei dient das Matrixbeam dazu, vorausfahrende beziehungsweise entgegenkommende Fahrzeuge aus dem Fernlicht auszublenden. Damit einhergehend kann entsprechend im Nahbereich die Beleuchtungsstärke in Richtung des detektierten Fahrzeugs gezielt reduziert werden, in anderen Bereichen gezielt erhöht werden, oder auch umgekehrt.

Bei einer weiteren vorteilhaften Ausgestaltung der Erfindung wird eine von einer Detektion eines Objekts in der Umgebung des Kraftfahrzeugs verschiedene Umgebungsinformation ermittelt, die ermittelte Umgebungsinformation nach einem vorbestimmten Kriterium als relevant oder nicht relevant eingestuft, und unter der Bedingung, dass die Umgebungsinformation als relevant eingestuft wird, die Einstufung der Umgebungsinformation als relevante Steuereinrichtung als ein weiterer Parameter übermittelt. Damit wird in vorteilhafter Weise durch eine Änderung der Beleuchtungsstärkeverteilung im Nahbereich dem Fahrer Informationen und Warnungen im Bezug auf seine Umgebung optisch vermittelt. Die Umgebungsinformationen können dabei vorteilhafterweise nach Relevanz eingestuft werden, sodass es möglich ist, dem Fahrer nur relevante Informationen anzuzeigen.

Beispielsweise stellt es eine besonders vorteilhafte Ausgestaltung der Erfindung dar, wenn als die Umgebungsinformation eine Umgebungstemperatur ermittelt wird. Unterschreitet die ermittelte Umgebungstemperatur beispielsweise einen vorbestimmten Grenzwert, z.B. 3°C, kann der Fahrer visuell über eine entsprechende Änderung der Beleuchtungsstärkeverteilung, wie beispielsweise eine vorbestimmte Dimmsequenz der LEDs, vor drohender Glatteisgefahr gewarnt werden.

Eine weitere vorteilhafte Ausgestaltung stellt es auch dar, wenn als die Umgebungsinformation Navigationsdaten und/oder auch Car2Car- bzw. Car2X-Daten, die über eine Kommunikationsverbindung des Kraftfahrzeugs mit anderen Kraftfahrzeugen übermittelt werden können, ermittelt werden. Dadurch kann vorteilhafterweise die Aufmerksamkeit des Fahrers über eine entsprechende Änderung der Beleuchtungsstärkeverteilung, wie beispielsweise wiederum eine vorbestimmte Dimmsequenz der LEDs, in eine spezielle Richtung gelenkt werden und/oder in einzelne Straßenbereiche, wie zum Beispiel auf den nächsten Abzweigepunkt der gewählten Navigations-Route, auf einen ermittelten Staubereich, eventuell gefährliche kurvenreiche Abschnitte, Verkehrsunfälle, gesperrte Straßenspuren, usw. Die Aufmerksamkeit kann beispielsweise durch Blinken oder schnelles Hoch- und Abdimmen mit Frequenzen von z.B. 0,5 Hz bis 30 Hz, vorzugsweise von 2 Hz bis 8 Hz in einzelnen Regionen erzeugt werden. Durch derartige Frequenzen lässt sich die Aufmerksamkeit des Fahrers besonders effektiv wecken. Derartige Frequenzen sind damit gerade im Zusammenhang mit Gefahrenwarnungen und anderen Warnhinweisen, die optisch als die Änderung der Beleuchtungsstärkeverteilung ausgegeben werden, vorteilhaft und können auch bei den zuvor beschriebenen Anwendungsfällen angewandt werden, in welchen die LEDs in einer vorbestimmten Sequenz hoch- und/oder heruntergedimmt werden.

Die zuvor beschriebenen Ausführungen können in vorteilhafter Weise auch in beliebiger Art und Weise miteinander kombiniert werden. Es können beispielsweise auch mehrere Parameter erfasst werden, die jeweils die oben genannten Situationen charakterisieren können, wobei für jeden der Parameter eine zugeordnete Änderung der Beleuchtungsstärkeverteilung erfolgt. Damit kann eine umfassende und situationsangepasste Beleuchtung bereitgestellt werden.

Bei einer weiteren vorteilhaften Ausgestaltung der Erfindung ändert die Steuereinrichtung beim Ändern der ersten Beleuchtungsstärkeverteilung in die mindestens eine zweite Beleuchtungsstärkeverteilung die erste Beleuchtungsstärkeverteilung in mehrere verschiedene zweite Beleuchtungsstärkeverteilungen, wobei die Änderung als eine Dimmsequenz der jeweiligen Halbleiterlichtquellen, die insbesondere eine zeitliche Abfolge der mehreren zweiten Beleuchtungsstärkeverteilungen definiert, fest vorgegeben ist. Mit anderen Worten können in Abhängigkeit von der Erfassung eines bestimmten Parameters vorab festgelegte Lichtverteilungssequenzen ablaufen, wie beispielsweise vorbestimmte Blinksequenzen, die durch schnelles Ein- und Ausschalten der LEDs beziehungsweise schnelles Hoch- und Herunterdimmen mit festgelegter Frequenz oder variabler Frequenz, z.B. im oben genannten Frequenzbereich, umgesetzt werden. Derartige Maßnahmen eignen sich besonders zur Erzeugung eines optischen Feedbacks, zum Auffinden des Kraftfahrzeugs, als Warnhinweise und/oder zum gezielten Lenken der Aufmerksamkeit des Fahrers, insbesondere wie anhand der obigen Ausführungsbeispiele beschrieben wurde.

Bei einer weiteren vorteilhaften Ausgestaltung der Erfindung bestimmt der Parameter die zweite Beleuchtungsstärkeverteilung und bei einer Änderung des Parameters wird die zweite Beleuchtungsstärkeverteilung in Abhängigkeit der Änderung des Parameters dynamisch geändert. Mit anderen Worten ist hierbei kein vorab festgelegter zeitlicher Ablauf der Änderung der Beleuchtungsstärkeverteilung vorgegeben, sondern diese wird dynamisch an den jeweils aktuell erfassten Parameterwert angepasst. Eine derartige Ausgestaltung ist besonders vorteilhaft im Hinblick auf die Erzeugung eines Kurvenlichts und/oder der Anpassung der Lichtstärkeverteilung an ein entgegenkommendes oder vorausfahrendes Fahrzeugs oder andere Verkehrsteilnehmen im Allgemeinen.

Des Weiteren betrifft die Erfindung eine Beleuchtungseinrichtung für ein Kraftfahrzeug, wobei die Beleuchtungseinrichtung eine Mehrzahl an Halbleiterlichtquellen und eine Steuereinrichtung zum Ansteuern der Halbleiterlichtquellen aufweist und dazu ausgelegt ist, ein Vorfeld der Beleuchtungseinrichtung zumindest in einem vorbestimmten Nahbereich mit einer vorbestimmten ersten Beleuchtungsstärkeverteilung zu beleuchten. Weiterhin ist die Beleuchtungseinrichtung dazu ausgelegt, ein Abblendlicht bereitzustellen, dass sich in einer Beleuchtungsrichtung genauso weit oder weiter erstreckt als der Nahbereich. Darüber hinaus ist die Steuereinrichtung dazu ausgelegt, automatisch einen Parameter zu erfassen und in Abhängigkeit von dem erfassten Parameter durch Ansteuerung der Halbleiterlichtquellen die erste Beleuchtungsstärkeverteilung zumindest im Nahbereich in zumindest eine zweite Beleuchtungsstärkeverteilung zu ändern. Weiterhin betrifft der Parameter einen Zustand und/oder eine Zustandsänderung mindestens einer von der Beleuchtungseinrichtung verschiedenen Komponente des Kraftfahrzeugs, wobei die Komponente ein Fahrerassistenzsystem des Kraftfahrzeugs darstellt, wobei die Steuereinrichtung dazu ausgelegt ist, als den Parameter eine Aktivierung und/oder Deaktivierung des Fahrerassistenzsystems zu erfassen, wobei das Fahrerassistenzsystem einen Spurhalteassistenten darstellt, und wobei ein Lichtbild, das durch die Änderung der Beleuchtungsstärkeverteilung erzeugt wird, gezielt Bereiche in Form einer seitlichen Betonung der Markierungsstreifen hervorhebt.

Die für das erfindungsgemäße Verfahren und seinen Ausgestaltungen genannten Merkmale und Merkmalskombinationen und deren Vorteile gelten in gleicher Weise für die erfindungsgemäße Beleuchtungseinrichtung. Darüber hinaus ermöglichen die im Zusammenhang mit dem erfindungsgemäßen Verfahren und seinen Ausgestaltungen genannten Verfahrensschritte die Weiterbildung der erfindungsgemäßen Beleuchtungseinrichtung durch weitere gegenständliche Merkmale. Weiterhin betrifft die Erfindung bevorzugt auch ein Kraftfahrzeug mit einer erfindungsgemäßen Beleuchtungseinrichtung. Weitere Vorteile, Merkmale und Einzelheiten der Erfindung ergeben sich aus der nachfolgenden Beschreibung bevorzugter Ausführungsbeispiele sowie anhand der Zeichnung. Dabei zeigen:
- Fig. 1: eine schematische Darstellung eines Kraftfahrzeugs mit einer Beleuchtungseinrichtung zur Erzeugung verschiedener Beleuchtungsstärkeverteilungen gemäß einem Ausführungsbeispiel der Erfindung;
- Fig. 2a: ein Ablaufdiagramm zur Veranschaulichung eines Verfahrens zum Betreiben einer Beleuchtungseinrichtung gemäß einem ersten Ausführungsbeispiel der Erfindung;
- Fig. 2b: ein Ablaufdiagramm zur Veranschaulichung eines Verfahrens zum Betreiben einer Beleuchtungseinrichtung gemäß einem zweiten Ausführungsbeispiel der Erfindung;
- Fig. 2c: ein Ablaufdiagramm zur Veranschaulichung eines Verfahrens zum Betreiben einer Beleuchtungseinrichtung gemäß einem dritten Ausführungsbeispiel der Erfindung; und
- Fig. 2d: eine Ablaufdiagramm zur Veranschaulichung eines Verfahrens zum Betreiben einer Beleuchtungseinrichtung gemäß einem vierten Ausführungsbeispiel der Erfindung.

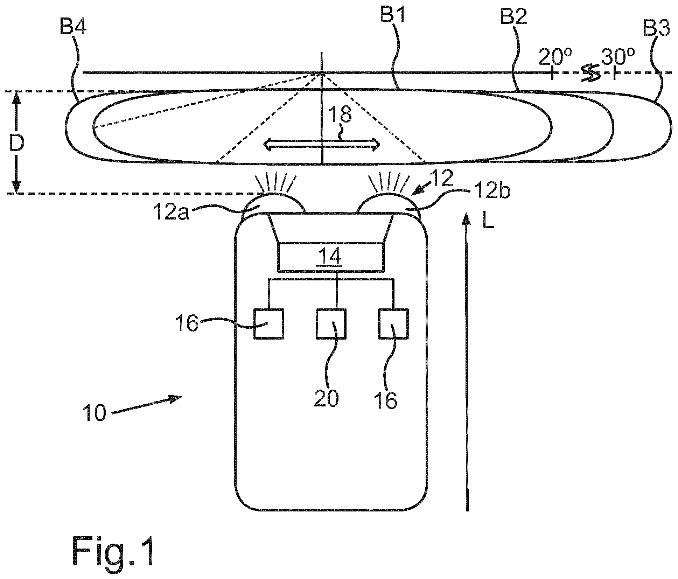

Fig. 1 zeigt eine schematische Darstellung eines Kraftfahrzeugs 10 mit einer Beleuchtungseinrichtung 12 zur Erzeugung verschiedener Beleuchtungsstärkeverteilungen B1, B2, B3, B4. Die Beleuchtungseinrichtung 12 umfasst hierbei zwei Kraftfahrzeugscheinwerfer 12a und 12b. Weiterhin umfasst jeder der Kraftfahrzeugscheinwerfer eine Mehrzahl an Halbleiterlichtquellen, bevorzugt LEDs. Darüber hinaus weist die Beleuchtungseinrichtung 12 eine Steuereinrichtung 14 zum Ansteuern der LEDs auf. Jede der LEDs ist dabei einzeln von der Steuereinrichtung 14 ansteuerbar und kann unabhängig von den anderen LEDs eingeschaltet, ausgeschaltet und gedimmt werden. Die Beleuchtungseinrichtung 12 ist nun so eingerichtet, dass ein Vorfeld des Kraftfahrzeugs 10 zumindest in einem vorbestimmten Nahbereich D beleuchtet werden kann. Dieser Nahbereich D erstreckt sich dabei in einer Fahrzeuglängsrichtung L maximal soweit, wie ein Abblendlicht, das von der Beleuchtungseinrichtung 12 bereitgestellt werden kann. D. h. die im Folgenden beschriebenen Änderungen der Beleuchtungsstärkeverteilung betreffen bevorzugt ausschließlich den Abblendlichtbereich oder einen noch kleineren Bereich.

Die Steuereinrichtung 14 ist nun dazu ausgelegt, LEDs derart anzusteuern, dass sich die durch diese erzeugte Beleuchtungsstärkeverteilung im Nahbereich D ändert. Der Nahbereich kann sich beispielsweise zwischen 10 m bis maximal 30 m, insbesondere zwischen 10 m und 25 m vor dem Fahrzeug bzw. den Scheinwerfern 12a und 12b erstrecken.

Diese Ansteuerung erfolgt dabei in Abhängigkeit von mindestens einem erfassten Parameter. Zur Erfassung dieses Parameters kann das Kraftfahrzeug 10 entsprechende Erfassungsmittel 16 aufweisen. Diese Erfassungsmittel 16 können beispielsweise einen Geschwindigkeitssensor, einen Außentemperatursensor, ein Navigationsgerät, ein Car2Car-System oder Car2X-System, eine Kamera, ein Radar, ein Ultraschallsensor und/oder Sensoren zur Erfassung eines Verrieglungssignals bzw. Entriegelungssignals, eines Motorstarts, eines Abschalten des Motors, ein Lenkwinkelsensor, usw. umfassen. Als Parameter können des Weiteren beispielsweise ein Lenkwinkel des Kraftfahrzeugs 10, eine Betätigung eines Verriegelungssystems des Kraftfahrzeugs 10, ein Starten oder Abschalten eines Motors des Kraftfahrzeugs 10, eine Geschwindigkeit des Kraftfahrzeugs 10, eine Aktivierung oder Deaktivierung eines Fahrerassistenzsystems des Kraftfahrzeugs 10, eine Außentemperatur, Navigationsdaten, die Position anderer Verkehrsteilnehmer, insbesondere anderer Kraftfahrzeuge, erfasst werden. Diese Parameter bieten viele Möglichkeiten, die Beleuchtungsstärkeverteilung an vielzählige unterschiedliche Situationen anzupassen. Dabei kann es zum einen vorgesehen sein, dass die Beleuchtungsstärkeverteilung dynamisch in Abhängigkeit eines erfassten Parameters geändert wird oder dass die Änderung der Beleuchtungsstärkeverteilung als vorbestimmte zeitliche Abfolge festgelegt ist.

Weiterhin ist es zum einen möglich, den Schwerpunkt der Beleuchtungsstärkeverteilung in horizontaler Richtung zu verschieben, was durch den Pfeil 18 veranschaulicht werden soll. Zum anderen kann sich damit einhergehend auch der durch die Beleuchtungseinrichtung 12 insgesamt ausgeleuchtete Bereich in seiner Größe ändern, insbesondere ebenfalls in horizontaler Richtung, was durch die vier hier exemplarisch dargestellten Beleuchtungsstärkeverteilungen B1, B2, B3 und B4 veranschaulicht werden soll. Die Möglichkeit, die LEDs der Beleuchtungseinrichtung 12 unabhängig voneinander anzusteuern, bietet jedoch zudem noch die Möglichkeit ganz gezielt bestimmte Bereiche im Nahbereich D stärker zu beleuchten, und andere Bereiche weniger stark zu beleuchten, wobei auch dies automatisch in Abhängigkeit der erfassten Parameter erfolgt. Diese Flexibilität in den Beleuchtungsmöglichkeiten ermöglicht es, eine besonders situationsangepasste Beleuchtung bereitzustellen.

Beispielsweise kann die Beleuchtungsstärkeverteilung dynamisch in Abhängigkeit des erfassten Lenkwinkels geändert werden, sodass im Nahbereich D ein Kurvenlicht bereitgestellt wird. Durch die einzelne Ansteuerbarkeit der jeweiligen LEDs lässt sich somit bei Kurvenfahrten die Straße im Nahbereich D optimal ausleuchten, zum Beispiel indem die LEDs in Kurvenrichtung, die durch den erfassten Lenkwinkel bestimmt ist, stärker als normal bestromt werden, während die LEDs, die nicht in die gewünschte Richtung leuchten, optional weniger stark als normal bestromt werden, wobei eine normale Bestromung die Bestromung der LED bei einer Geradeausfahrt bezeichnet. Dadurch lassen sich gezielt Inhomogenitäten in der Beleuchtungsstärkeverteilung erzeugen, die das Auge des Fahrers gezielt auf den Kurvenverlauf lenken.

Weiterhin ist es auch möglich, direkt vorausfahrende Fahrzeuge, zum Beispiel mittels Radar oder Ultraschallsensoren, zu detektieren und die Beleuchtungsstärkeverteilung dynamisch an die Position der vorausfahrenden Fahrzeuge anzupassen. Darüber hinaus ist auch die Möglichkeit gegeben, weit entfernte Fahrzeuge, die sich also nicht im Nahbereich D befinden, zu erfassen, wie beispielsweise entgegenkommende Fahrzeuge, und die Beleuchtungsstärkeverteilung im Nahbereich D an die in der Entfernung detektierten Fahrzeuge vorausschauend anzupassen.

Darüber hinaus ist auch die Möglichkeit gegeben, die Beleuchtungsstärkeverteilung nach einer vorgegebenen Animationsreihenfolge beziehungsweise Dimmsequenz oder einem Beleuchtungsmuster zu ändern. Eine derartige Dimmsequenz kann dabei zum Beispiel einen zeitlichen Ablauf der Änderung der Beleuchtungsstärkeverteilung festlegen. Dazu können beispielsweise auch verschiedene solcher Abläufe in einem Speicher 20 des Kraftfahrzeugs abgelegt sein und je nach erfassten Parameter von der Steuereinrichtung 14 abgerufen und durch entsprechende Ansteuerung der Beleuchtungseinrichtung 12 durch die Steuereinrichtung 14 umgesetzt werden. Durch derartige festgelegte Abläufe der Beleuchtungsstärkeänderungen können dem Fahrer beispielsweise Warnhinweise oder optische Feedbacks ausgegeben werden. Eine solche Dimmsequenz kann beispielsweise ablaufen, wenn das Kraftfahrzeug 10 eine vorbestimmte Geschwindigkeit überschreitet, um den Fahrer zu veranlassen, die Geschwindigkeit zu reduzieren. Auch kann zum Beispiel auch eine geeignete Dimmsequenz ableuafen, wenn das Kraftfahrzeug 10 detektiert, dass die Außentemperatur einen bestimmten Grenzwert unterschreitet, wodurch der Fahrer vorteilhafter Weise durch die ablaufende Dimmsequenz auf mögliche Glatteisgefahr aufmerksam gemacht werden kann. Weitere geeignete, vorbestimmte Dimmsequenzen können ablaufen, wenn das Kraftfahrzeug gestartet wird, beim Auf- und Abschließen des Kraftfahrzeugs 10, insbesondere um das Fahrzeug leichter zu erkennen und den Fahrer über ordnungsgemäßes Verriegeln zu informieren, beim Aktivieren eines Fahrerassistenzsystems, um dem Fahrer ein Feedback über die Aktivierung auszugeben, beim Abschalten des Motors im Zuge eines Start-Stopp-Systems, insbesondere zur Energiesparzwecken, und in vielzähligen weiteren Situationen. Damit lässt sich die Möglichkeit, vielzählige unterschiedliche Beleuchtungsstärkeverteilungen durch einzelne Ansteuerung der LEDs bereitstellen zu können, in vorteilhafter Weise optimal ausnutzen, um vielzähligen unterschiedlichen Situationen durch eine angepasste Beleuchtung Rechnung tragen zu können.

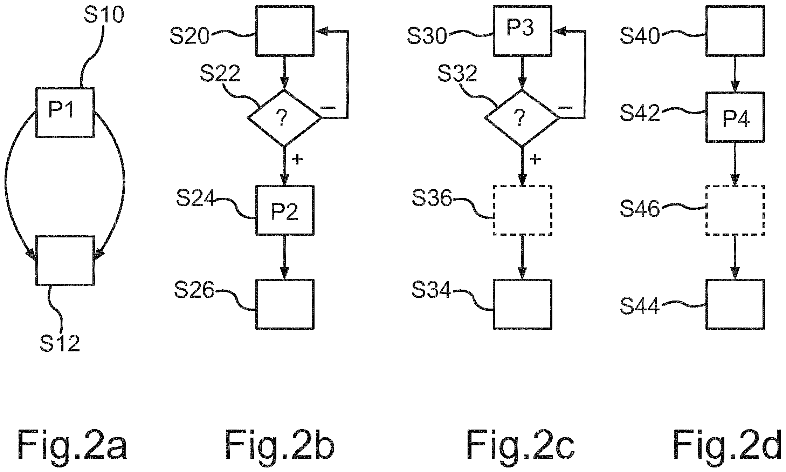

Fig. 2a zeigt ein Ablaufdiagramm zur Veranschaulichung eines Verfahrens zum Betreiben einer Beleuchtungseinrichtung 12 gemäß einem ersten Ausführungsbeispiel der Erfindung. In diesem Ausführungsbeispiel wird als Parameter P1 ein Lenkwinkel des Kraftfahrzeugs 10 erfasst und die Beleuchtungsstärkeverteilung dynamisch an den erfassten Lenkwinkel angepasst. Die Erfassung des aktuellen Lenkwinkels als Parameter P1 erfolgt hierbei im Schritt S10, wobei daraufhin die Beleuchtungsstärkeverteilung in Abhängigkeit des aktuellen Lenkwinkels im Schritt S12 angepasst wird. Dieser Verfahrensablauf kann fortwährend wiederholt werden, z.B. sodass die Erfassung des Lenkwinkels in Schritt S10 und die darauffolgende Anpassung der Beleuchtungsstärkeverteilung in Schritt S12 wiederholt in diskreten Zeitabständen, insbesondere quasi kontinuierlich, erfolgt. Die Beleuchtungsstärkeverteilung kann dabei in der Weise geändert werden, dass der Lichtschwerpunkt der Beleuchtungsstärkeverteilung in horizontaler Richtung oder proportional zum erfassten Lenkwinkel verschoben wird, und bevorzugt zusätzlich auch der Intensitätsverlauf im dabei ausgeleuchteten Bereichs geändert wird. Zusätzlich ist es möglich, bei sehr großen Lenkwinkeln, zum Beispiel größer als ein vorbestimmter Grenzwert, also bei sehr engen Kurven, LEDs, die das Abbiegelicht bilden, zuzuschalten, beziehungsweise hochzudimmen, vorzugsweise ebenfalls in Abhängigkeit des erfassten Lenkwinkels beziehungsweise nach einer vorgegeben Animationsreihenfolge. So wird gerade im Nahbereich D beziehungsweise Abblendlichtbereich immer eine optimale Ausleuchtung des Vorfelds des Kraftfahrzeugs 10 gewährleistet.

Fig. 2b zeigt ein Ablaufdiagramm zur Veranschaulichung eines Verfahrens zum Betreiben einer Beleuchtungseinrichtung 12 gemäß einem zweiten Ausführungsbeispiel der Erfindung. Gemäß diesem Ausführungsbeispiel wird als Parameter P2 die Position eines anderen Verkehrsteilnehmers erfasst und in Abhängigkeit der erfassten Position die Beleuchtungsstärkeverteilung geändert. Hierzu wird zunächst in einem Schritt S20 in Kombination mit Schritt S22 wiederholt überprüft, ob ein anderer Verkehrsteilnehmer, insbesondere ein anderes Kraftfahrzeug, erfasst wurde. Die Erfassung anderer Verkehrsteilnehmer kann dabei beispielsweise mittels einer Kamera des Kraftfahrzeugs 10, insbesondere für weit entfernte Kraftfahrzeuge, und/oder durch Radar oder Ultraschallsensoren, insbesondere für direkt vorausfahrende Fahrzeuge oder auch neben dem Kraftfahrzeug fahrende Fahrzeuge, erfasst werden. Diese Erfassungsmittel können in Schritt S20 wiederholt Umgebungsinformationen erfassen, wobei in Schritt S22 geprüft wird, ob auf Basis dieser Erfassung ein anderer Verkehrsteilnehmer detektiert wurde. Ergibt dabei die Erfassung in Schritt S22, das kein anderer Verkehrsteilnehmer erfasst wurde, wird die Erfassung in Schritt S20 wiederholt und in Schritt S22 wiederum auf die Erfassung eines anderen Verkehrsteilnehmers hin überprüft. Wird dabei in Schritt S22 ein anderer Verkehrsteilnehmen erkannt, so wird in Schritt S24 als Parameter P2 die Position des anderen erfassten Verkehrsteilnehmers ermittelt und in Schritt S26 die Beleuchtungsstärkeverteilung in Abhängigkeit der ermittelten Position geändert.

Diese Vorgehensweise kann beispielsweise dazu genutzt werden, Fernlichtfunktionen in Form des Matrixbeams auch im Nahbereich D zu unterstützen. Dabei dient das Matrixbeam dazu, vorausfahrende beziehungsweise entgegenkommende Fahrzeuge aus dem Fernlicht auszublenden. Um diesen für den Fahrer dadurch entstehenden Helligkeitsverlust zu kompensieren, kann es vorgesehen sein, dass die Beleuchtungsstärkeverteilung in Nahbereich derart geändert wird, dass die Beleuchtungsstärke in Richtung der Position des erfassten Fahrzeugs gezielt erhöht wird. Umgekehrt wäre es aber auch denkbar, die Beleuchtungsstärke in Richtung des erfassten Kraftfahrzeugs und/oder in einem vor dem entgegenkommenden Fahrzeug liegenden Fahrbahnbereich gezielt zu reduzieren, um beispielsweise für ein entgegenkommendes Fahrzeug das Blendungsrisiko zusätzlich zu minimieren. Andere davon verschiedene Bereiche im Nahbereich, die z.B. nicht in Richtung des erfassten Kraftfahrzeugs liegen, können ebenso gezielt stärker oder schwächer beleuchtet werden, je nach Situation und in Abhängigkeit zum Beispiel von anderen Verkehrsteilnehmern. Ein weiteres Beispiel für die Anwendung dieses Verfahrens wäre, andere Kraftfahrzeuge in unmittelbarer Umgebung des Kraftfahrzeugs 10 zu erfassen, wie beispielsweise direkt vorausfahrende Fahrzeuge, und ebenso gezielt die Beleuchtungsstärkeverteilung in Richtung des vorausfahrenden Fahrzeugs zu erhöhen oder zu reduzieren und in anderen Bereichen umgekehrt gezielt zu reduzieren beziehungsweise zu erhöhen. Auch kann die Erfassung anderer Verkehrsteilnehmer genutzt werden, um mögliche gefährliche Situation zu detektieren. Will beispielsweise ein Fahrer einen Überholvorgang starten und setzt dazu einen Blinker während von einem Erfassungsmittel 16 des Kraftfahrzeugs 10 erfasst wird, dass sich ein weiterer Verkehrsteilnehmer neben dem Kraftfahrzeug 10 befindet, kann die Steuereinrichtung 14 durch eine vorbestimmte Änderung der Beleuchtungsstärkeverteilung dem Fahrer gezielt einen Warnhinweis ausgeben. Damit können auch gezielt Inhomogenitäten in der Beleuchtungsstärkeverteilung im Nahbereich in Abhängigkeit der Position anderer Verkehrsteilnehmer erzeugt werden.

Fig. 2c zeigt ein Ablaufdiagramm zur Veranschaulichung eines Verfahrens zum Betreiben einer Beleuchtungseinrichtung 12 gemäß einem weiteren Ausführungsbeispiel der Erfindung. Hierbei wird in Schritt S30 ein Parameter P3 erfasst, welcher beispielsweise die Geschwindigkeit des Kraftfahrzeugs 10, eine Außentemperatur und/oder Navigationsdaten und/oder Car2Car- und/oder Car2X-Daten darstellen kann. Weiterhin wird in einem Schritt S32 überprüft, ob der erfasste Parameter P3 nach einem vorbestimmten Kriterium relevant ist oder nicht. Ist er dies nicht, so wird der Parameter P3 in Schritt S30 erneut erfasst und dieses Verfahren fortwährend wiederholt. Wird in Schritt S32 jedoch festgestellt, dass der erfasste Parameter P3 relevant ist, wird in Schritt S34 die Beleuchtungsstärkeverteilung entsprechend geändert. Solche Situationen umfassen zum Beispiel, wenn die Geschwindigkeit des Kraftfahrzeugs 10 einen vorbestimmten Grenzwert beziehungsweise eine aktuell zulässige Höchstgeschwindigkeit überschreitet, wenn die erfasste Außentemperatur einen bestimmten Grenzwert unterschreitet, sodass zum Beispiel Glatteisgefahr droht, oder wenn auf Basis der Navigationsdaten ein Abbiegemanöver einer geplanten Route bevorsteht, oder auf Basis der Navigationsdaten oder der von einem Car2Car- beziehungsweise Car2X-System erfassten Daten eine Gefahrenstelle, wie beispielsweise eine Baustelle, eine Spursperrung, ein Stau und dergleichen bevorsteht. In derartigen Situationen kann die Steuereinrichtung 14 durch entsprechende Ansteuerung der Beleuchtungseinrichtung 12 durch eine entsprechende Änderung der Beleuchtungsstärkeverteilung dem Fahrer eine optische Warnung ausgeben. Die Änderung der Beleuchtungsstärkeverteilung kann dabei in Form einer vorbestimmten und im Speicher 20 des Kraftfahrzeugs 10 abgelegten Dimmsequenz erfolgen. Durch die jeweiligen Situationen kann dabei auch eine jeweilige zugeordnete und sich untereinander unterscheidende Dimmsequenz im Speicher 20 abgelegt sein. Wird also beispielsweise in Schritt S32 erfasst, dass der ermittelte Parameter P3 relevant ist, so kann in einem optionalen Schritt S36 die Steuereinrichtung 14 dem Parameter P3 die korrespondierende Dimmsequenz zuordnen und aus dem Speicher 20 abrufen und in Schritt S34 als entsprechende Änderung der Beleuchtungsstärkeverteilung umsetzen.

Fig. 2d zeigt ein Ablaufdiagramm zur Veranschaulichung eines Verfahrens zum Betreiben einer Beleuchtungseinrichtung gemäß einem vierten Ausführungsbeispiel der Erfindung. In diesem Beispiel ist eine ereignisgetriggerte Beleuchtungsstärkeverteilungsänderung dargestellt. Findet beispielsweise in Schritt S40 ein Auslöserereignis statt, so wird in Schritt S42 ein diesem Auslöserereignis zugeordneter Parameter P4 erfasst. Dieses Auslöseereignis kann beispielsweise das Aufschließen des Kraftfahrzeugs, das Abschließen des Kraftfahrzeugs, das Starten des Motors des Kraftfahrzeugs 10, das Abschalten des Motors im Rahmen eines Start-Stopp-Betriebs, und/oder das Aktivieren eines Fahrerassistenzsystems darstellen. zahlreiche weitere Ereignisse, die vom Kraftfahrzeug erfasst werden können, sind ebenfalls denkbar. Wird also in Schritt S42 ein derartiges Ereignis erfasst, steuert die Steuereinrichtung in Schritt S44 die Beleuchtungseinrichtung 12 zur Änderung der Beleuchtungsstärkeverteilung entsprechend an. Hierbei besteht ebenfalls die Möglichkeit, für die genannten verschiedenen Ereignisse jeweils eine zugeordnete Dimmsequenz im Speicher abzulegen und in einem optionalen Schritt S46 zunächst das erfasste Ereignis der entsprechenden Dimmsequenz zuzuordnen und erst dann in Schritt S44 die zugeordnete Dimmsequenz durch entsprechende Änderung der Beleuchtungsstärkeverteilung umzusetzen. Beispielsweise kann bei einem erfassten Erststart des Kraftfahrzeugs durch das Hoch- beziehungsweise Herunterdimmen der LEDs in einer festgelegten zeitlichen Abfolge ein Einschalteffekt erzeugt werden, der dem Fahrer signalisiert, dass sein Beleuchtungssystem betriebsbereit und aktiviert ist. Wird zum Beispiel ein Aufschließen des Kraftfahrzeugs erfasst, kann durch eine vorbestimmte Dimmsequenz der LEDs ermöglicht werden, dass der Fahrer sein Fahrzeug, insbesondere bei einer größeren Anzahl an weiteren Fahrzeugen, schnell erkennen und auffinden kann. Schließt der Fahrer sein Fahrzeug ab, kann durch das Hoch- beziehungsweise Herunterdimmen der LEDs in der vorbestimmten Reihenfolge dem Fahrer ein Feedback darüber gegeben werden, dass sein Fahrzeug ordnungsgemäß verschlossen ist. Wird beispielsweise der Motor im Rahmen eines Start-Stopp-Betriebs abgeschaltet, werden bevorzugt die LEDs, oder zumindest manche davon, auf ein vorbestimmtes Niveau heruntergedimmt, um Energie zu sparen, bis ein Motor wieder gestartet wird. Aktiviert der Fahrer ein Fahrerassistenzsystem, kann durch die entsprechende Dimmsequenz dem Fahrer ebenfalls ein Feedback ausgegeben werden, dass das System aktiv ist beziehungsweise aktiviert wurde. Durch die vorbestimmten Dimmsequenzen können dabei nicht nur zeitliche Variationen der Beleuchtungsstärke, z.B. in einem vorbestimmten Frequenzbereich, realisiert werden, sondern ebenfalls räumliche Inhomogenitäten in der Beleuchtungsstärkeverteilung, z.B. in Form räumlich strukturierter Muster. Weiterhin ist es möglich, dass eine derartige Dimmsequenz für eine vorbestimmte, vorab festgelegte Zeitdauer abläuft, oder so lange andauert und/oder wiederholt wird bis ein vorbestimmtes weiteres Ereignis erfasst wird. Wird z.B. eine Dimmsequenz gestartet, wenn erfasst wird, dass das Kraftfahrzeug entriegelt wurde, so kann diese Dimmsequenz nach einer vorbestimmten Zeitdauer automatisch beendet werden oder auch so lange ablaufen, bis der Fahrer zu seinem Kraftfahrzeug gelangt ist, und z.B. die Tür öffnet, was als weiteres Ereignis detektiert wird. Bei der Detektion einer Gefahrensituation kann die Dimmsequenz ebenfall entweder für eine vorbestimmte Zeitspanne andauern oder solange wiederholt werden, bis detektiert wird, dass die Gefahrensituation nicht mehr gegeben ist.

All diese genannten Beispiele lassen sich auch in beliebiger Weise miteinander kombinieren, das heißt die beschriebenen Verfahrensabläufe können auch gleichzeitig beziehungsweise parallel zueinander laufend durchgeführt werden. Beispielsweise kann zur Bereitstellung des Kurvenlichts eine permanente Anpassung der Beleuchtungsstärkeverteilung an den erfassten Lenkwinkel erfolgen, wobei, wenn zusätzlich eine Gefahrensituation, wie beispielsweise eine überhöhte Geschwindigkeit, erfasst wird, dem Fahrer durch eine zusätzlich ablaufende Dimmsequenz ein Warnhinweis ausgegeben werden kann. Auch kann den einzelnen Parametern eine entsprechende Priorität zugeordnet werden, sodass manche Parameter höher priorisiert sind als andere. Aktiviert beispielsweise der Fahrer ein Fahrerassistenzsystem und wird gleichzeitig dazu eine Gefahrensituation erfasst, so kann der Gefahrensituation einer höhere Priorität zugeordnet werden und zunächst die der entsprechenden Gefahrensituation zugeordnete Beleuchtungssequenz durch die Beleuchtungseinrichtung 12 umgesetzt werden.

Insgesamt wird so ein Verfahren und eine Beleuchtungseinrichtung bereitgestellt, die es ermöglichen, durch viele einzeln adressierbare Lichtquellen, insbesondere LEDs, im Nahbereich vielzählige unterschiedliche Beleuchtungsstärkeverteilungen in Abhängigkeit von automatisch erfassten Parameter situationsangepasst umzusetzen, wodurch die Verkehrsicherheit erhöht, eine Bedienerleichterung für den Fahrer bereitgestellt und zusätzlich auch Energie gespart werden kann.

## Patentansprüche

1. Verfahren zum Betreiben einer Beleuchtungseinrichtung (12) eines Kraftfahrzeugs (10), wobei die Beleuchtungseinrichtung (12) eine Mehrzahl an Halbleiterlichtquellen und eine Steuereinrichtung (14) zum Ansteuern der Halbleiterlichtquellen aufweist und dazu ausgelegt ist, ein Vorfeld des Kraftfahrzeugs (10) zumindest in einem vorbestimmten Nahbereich (D) mit einer vorbestimmten ersten Beleuchtungsstärkeverteilung (B1; B2; B3; B4) zu beleuchten, wobei die Beleuchtungseinrichtung (12) dazu ausgelegt ist, ein Abblendlicht bereitzustellen, das sich in einer Fahrzeuglängsrichtung (L) genauso weit oder weiter erstreckt als der Nahbereich (D), wobei die Steuereinrichtung (14) automatisch einen Parameter (P1; P2; P3; P4) erfasst und in Abhängigkeit von dem erfassten Parameter (P1; P2; P3; P4) durch Ansteuerung der Halbleiterlichtquellen die erste Beleuchtungsstärkeverteilung (B1; B2; B3; B4) zumindest im Nahbereich (D) in zumindest eine zweite Beleuchtungsstärkeverteilung (B1; B2; B3; B4) ändert, wobei
- der Parameter (P1; P2; P3; P4) einen Zustand und/oder eine Zustandsänderung mindestens einer von der Beleuchtungseinrichtung (12) verschiedenen Komponente des Kraftfahrzeugs (10) betrifft,
- die Komponente ein Fahrerassistenzsystem des Kraftfahrzeugs (10) darstellt, **dadurch gekennzeichnet, dass** als der Parameter (P1; P2; P3; P4) eine Aktivierung und/oder Deaktivierung des Fahrerassistenzsystem erfasst wird,
- wobei das Fahrerassistenzsystem einen Spurhalteassistenten darstellt, und
- wobei ein Lichtbild, das durch die Änderung der Beleuchtungsstärkeverteilung erzeugt wird, gezielt Bereiche in Form einer seitlichen Betonung der Markierungsstreifen hervorhebt.

2. Verfahren nach Anspruch 1,
**dadurch gekennzeichnet, dass**
mehrere Parameter (P1; P2; P3; P4) erfasst werden, die jeweils eine Situation charakterisieren, wobei für jeden der Parameter eine zugeordnete Änderung der Beleuchtungsstärkeverteilung erfolgt.

3. Verfahren nach Anspruch 2,
**dadurch gekennzeichnet, dass**
eine weitere Komponente zumindest eine der Folgenden darstellt:
- ein Lenksystem des Kraftfahrzeugs (10), wobei als weiterer Parameter (P1; P2; P3; P4) ein Lenkwinkel des Lenksystems erfasst wird;
- ein Verriegelungssystem des Kraftfahrzeugs (10) für ein Ent- und Verriegeln von Türen des Kraftfahrzeugs, wobei als weiterer Parameter (P1; P2; P3; P4) ein Ver- und/oder Entriegeln des Kraftfahrzeugs erfasst wird;
- einen Motor des Kraftfahrzeugs (10), wobei als weiterer Parameter (P1; P2; P3; P4) ein Starten und/oder Abschalten des Motors erfasst wird;
- ein Antriebssystem des Kraftfahrzeugs (10), wobei als weiterer Parameter (P1; P2; P3; P4) eine Geschwindigkeit des Kraftfahrzeugs erfasst wird.

4. Verfahren nach einem der Ansprüche 2 oder 3,
**dadurch gekennzeichnet, dass**
ein weiterer Parameter (P1; P2; P3; P4) einen ein Umfeld des Kraftfahrzeugs (10) betreffenden und durch ein Erfassungsmittel (16) des Kraftfahrzeugs (10) automatisch ermittelten Parameter (P1; P2; P3; P4) darstellt, insbesondere wobei die Ermittlung des Parameters (P1; P2; P3; P4) zumindest während einer Fahrt des Kraftfahrzeugs (10) in vorbestimmten Zeitabständen wiederholt stattfindet.

5. Verfahren nach Anspruch 4,
**dadurch gekennzeichnet, dass**
ein Erfassungsmittel (16) des Kraftfahrzeugs (10) erfasst, wenn sich ein anderes Kraftfahrzeug im Nahbereich des Kraftfahrzeugs (10) befindet, wobei das Erfassungsmittel (16), wenn sich ein anderes Kraftfahrzeug im Nahbereich des Kraftfahrzeugs (10) befindet, eine Position des anderen Kraftfahrzeugs in Bezug auf das Kraftfahrzeug (10) ermittelt, wobei die Position des anderen Kraftfahrzeugs an die Steuereinrichtung (14) als der weitere Parameter (P1; P2; P3; P4) übermittelt wird.

6. Verfahren nach Anspruch 4 oder 5,
**dadurch gekennzeichnet, dass**
eine von einer Detektion eines Objekts in der Umgebung des Kraftfahrzeugs (10) verschiedene Umgebungsinformation ermittelt wird, die ermittelte Umgebungsinformation nach einem vorbestimmten Kriterium als relevant oder nicht relevant eingestuft wird, und unter der Bedingung, dass die Umgebungsinformation als relevant eingestuft wird, die Einstufung der Umgebungsinformation als relevant der Steuereinrichtung (14) als der weitere Parameter (P1; P2; P3; P4) übermittelt wird.

7. Verfahren nach Anspruch 6,
**dadurch gekennzeichnet, dass**
als die Umgebungsinformation eine Umgebungstemperatur und/oder Navigationsdaten ermittelt werden.

8. Verfahren nach einem der vorhergehenden Ansprüche,
**dadurch gekennzeichnet, dass**
die Steuereinrichtung (14) beim Ändern der ersten Beleuchtungsstärkeverteilung (B1; B2; B3; B4) in die mindestens eine zweite Beleuchtungsstärkeverteilung (B1; B2; B3; B4) die erste Beleuchtungsstärkeverteilung (B1; B2; B3; B4) in mehrere verschiedene zweite Beleuchtungsstärkeverteilungen (B1; B2; B3; B4) ändert, wobei die Änderung als eine Dimmsequenz der jeweiligen Halbleiterlichtquellen, die insbesondere eine zeitliche Abfolge der mehreren zweiten Beleuchtungsstärkeverteilungen (B1; B2; B3; B4) definiert, fest vorgegeben ist.

9. Verfahren nach einem der vorhergehenden Ansprüche,
**dadurch gekennzeichnet, dass**
der Parameter (P1; P2; P3; P4) die zweite Beleuchtungsstärkeverteilung (B1; B2; B3; B4) bestimmt und bei einer Änderung des Parameters (P1; P2; P3; P4) die zweite Beleuchtungsstärkeverteilung (B1; B2; B3; B4) in Abhängigkeit der Änderung des Parameters (P1; P2; P3; P4) dynamisch geändert wird.

10. Beleuchtungseinrichtung (12) für ein Kraftfahrzeug (10), wobei die Beleuchtungseinrichtung (12) eine Mehrzahl an Halbleiterlichtquellen und eine Steuereinrichtung (14) zum Ansteuern der Halbleiterlichtquellen und dazu ausgelegt ist, ein Vorfeld der Beleuchtungseinrichtung (12) zumindest in einem vorbestimmten Nahbereich (D) mit einer vorbestimmten ersten Beleuchtungsstärkeverteilung (B1; B2; B3; B4) zu beleuchten, wobei die Beleuchtungseinrichtung (12) dazu ausgelegt ist, ein Abblendlicht bereitzustellen, das sich in einer Beleuchtungsrichtung (L) genauso weit oder weiter erstreckt als der Nahbereich (D), wobei die Steuereinrichtung (14) dazu ausgelegt ist, automatisch einen Parameter (P1; P2; P3; P4) zu erfassen und in Abhängigkeit von dem erfassten Parameter (P1; P2; P3; P4) durch Ansteuerung der Halbleiterlichtquellen die erste Beleuchtungsstärkeverteilung (B1; B2; B3; B4) zumindest im Nahbereich (D) in zumindest eine zweite Beleuchtungsstärkeverteilung (B1; B2; B3; B4) zu ändern, wobei
- der Parameter (P1; P2; P3; P4) einen Zustand und/oder eine Zustandsänderung mindestens einer von der Beleuchtungseinrichtung (12) verschiedenen Komponente des Kraftfahrzeugs (10) betrifft,
- die Komponente ein Fahrerassistenzsystem des Kraftfahrzeugs (10) darstellt,
- **dadurch gekennzeichnet, dass** die Steuereinrichtung (14) dazu ausgelegt ist, als den Parameter eine Aktivierung und/oder Deaktivierung des Fahrerassistenzsystem zu erfassen,
- wobei das Fahrerassistenzsystem einen Spurhalteassistenten darstellt, und
- wobei ein Lichtbild, das durch die Änderung der Beleuchtungsstärkeverteilung erzeugt wird, gezielt Bereiche in Form einer seitlichen Betonung der Markierungsstreifen hervorhebt.

## Claims

1. A method for operating an illumination device (12) of a motor vehicle (10), wherein the illumination device (12) comprises a plurality of semiconductor light sources and a control device (14) for controlling the semiconductor light sources and is configured to illuminate a front area of the motor vehicle (10) with a predetermined first illumination intensity distribution (B1; B2; B3; B4) at least in a predetermined near range (D), wherein the illumination device (12) is configured to provide a low beam, which extends in a vehicle longitudinal direction (L) as far as or farther than the near range (D), wherein the control device (14) automatically detects a parameter (P1; P2; P3; P4) and changes the first illumination intensity distribution (B1; B2; B3; B4) at least in the near range (D) into at least one second illumination intensity distribution (B1; B2; B3; B4) depending on the detected parameter (P1; P2; P3; P4) by controlling the semiconductor light sources,
wherein
- the parameter (P1; P2; P3; P4) relates to a state and/or a change of state of at least one component of the motor vehicle (10) different from the illumination device (12),
- the component represents a driver assistance system of the motor vehicle (10), **characterized in that**
an activation and/or deactivation of the driver assistance system is detected as the parameter (P1; P2; P3; P4),
- wherein the driver assistance system represents a lane keeping assistant, and
- wherein a light image, which is generated by the change of the illumination intensity distribution, specifically highlights areas in the form of a lateral emphasis of the marking stripes.

2. The method according to claim 1,
**characterized in that**
multiple parameters (P1; P2; P3; P4) are detected, which each characterize a situation, wherein an associated change of the illumination intensity distribution is effected for each of the parameters.

3. The method according to claim 2,
**characterized in that**
a further component represents at least one of the following:
- a steering system of the motor vehicle (10), wherein a steering angle of the steering system is detected as a further parameter (P1; P2; P3; P4);
- a locking system of the motor vehicle (10) for unlocking and locking doors of the motor vehicle, wherein locking and/or unlocking of the motor vehicle are detected as a further parameter (P1; P2; P3; P4);
- a motor of the motor vehicle (10), wherein starting and/or shutting down the motor are detected as a further parameter (P1; P2; P3; P4);
- a drive system of the motor vehicle (10), wherein a speed of the motor vehicle is detected as a further parameter (P1; P2; P3; P4).

4. The method according to any one of claims 2 or 3,
**characterized in that**
a further parameter (P1; P2; P3; P4) represents a parameter (P1; P2; P3; P4) relating to an environment of the motor vehicle (10) and automatically ascertained by a detection means (16) of the motor vehicle (10), wherein in particular the ascertainment of the parameter (P1; P2; P3; P4) repeatedly occurs in predetermined time intervals at least during a drive of the motor vehicle (10).

5. The method according to claim 4,
**characterized in that**
a detection means (16) of the motor vehicle (10) detects if another motor vehicle is in the near range of the motor vehicle (10), wherein the detection means (16), if another motor vehicle is in the near range of the motor vehicle (10), ascertains a position of the other motor vehicle with respect to the motor vehicle (10), wherein the position of the other motor vehicle is communicated to the control device (14) as the further parameter (P1; P2; P3; P4).

6. The method according to claim 4 or 5,
**characterized in that**
environmental information different from a detection of an object in the environment of the motor vehicle (10) is ascertained, the ascertained environmental information is categorized as relevant or not relevant according to a predetermined criterion, and on condition that the environmental information is categorized as relevant, the categorization of the environmental information as relevant is communicated to the control device (14) as the further parameter (P1; P2; P3; P4).

7. The method according to claim 6,
**characterized in that**
an ambient temperature and/or navigation data are ascertained as the environmental information.

8. The method according to any one of the preceding claims,
**characterized in that**
the control device (14) changes the first illumination intensity distribution (B1; B2; B3; B4) into multiple different second illumination intensity distributions (B1; B2; B3; B4) in changing the first illumination intensity distribution (B1; B2; B3; B4) into the at least one second illumination intensity distribution (B1; B2; B3; B4), wherein the change is fixedly preset as a dimming sequence of the respective semiconductor light sources, which in particular defines a temporal succession of the multiple second illumination intensity distributions (B1; B2; B3; B4).

9. The method according to any one of the preceding claims,
**characterized in that**
the parameter (P1; P2; P3; P4) determines the second illumination intensity distribution (B1; B2; B3; B4) and, upon a change of the parameter (P1; P2; P3; P4), the second illumination intensity distribution (B1; B2; B3; B4) is dynamically changed depending on the change of the parameter (P1; P2; P3; P4).

10. An illumination device (12) for a motor vehicle (10), wherein the illumination device (12) comprises a plurality of semiconductor light sources and a control device (14) for controlling the semiconductor light sources and is configured to illuminate a front area of the illumination device (12) with a predetermined first illumination intensity distribution (B1; B2; B3; B4) at least in a predetermined near range (D), wherein the illumination device (12) is configured to provide a low beam, which extends in an illumination direction (L) as far as or farther than the near range (D), wherein the control device (14) is configured to automatically detect a parameter (P1; P2; P3; P4) and to change the first illumination intensity distribution (B1; B2; B3; B4) at least in the near range (D) into at least one second illumination intensity distribution (B1; B2; B3; B4) depending on the detected parameter (P1; P2; P3; P4) by controlling the semiconductor light sources,
wherein
- the parameter (P1; P2; P3; P4) relates to a state and/or a change of state of at least one component of the motor vehicle (10) different from the illumination device (12),
- the component represents a driver assistance system of the motor vehicle (10), **characterized in that**
the control device (14) is configured to detect an activation and/or
deactivation of the driver assistance system as the parameter,
- wherein the driver assistance system represents a lane keeping assistant, and
- wherein a light image, which is generated by the change of the illumination intensity distribution, specifically highlights areas in the form of a lateral emphasis of the marking stripes.

## Revendications

1. Procédé pour faire fonctionner un dispositif d'éclairage (12) d'un véhicule à moteur (10), le dispositif d'éclairage (12) comportant une pluralité de sources de lumière à semi-conducteur et un dispositif de commande (14) destiné à commander les sources de lumière à semi-conducteur et étant conçu pour éclairer un avant proche du véhicule à moteur (10) au moins dans une zone proche (D) prédéterminée avec une première répartition de l'éclairement lumineux (B1 ; B2 ; B3 ; B4) prédéterminée, le dispositif d'éclairage (12) étant conçu pour fournir un feu de croisement qui s'étend dans une direction longitudinale de véhicule (L) au moins aussi loin ou plus loin que la zone proche (D), le dispositif de commande (14) détectant automatiquement un paramètre (P1 ; P2 ; P3 ; P4) et changeant en fonction du paramètre (P1 ; P2 ; P3 ; P4) détecté, en commandant les sources de lumière à semi-conducteur, la première répartition de l'éclairement lumineux (B1 ; B2 ; B3 ; B4) au moins dans la zone proche (D), en au moins une seconde répartition de l'éclairement lumineux (B1 ; B2 ; B3 ; B4),
- le paramètre (P1 ; P2 ; P3 ; P4) concernant un état et/ou un changement d'état d'au moins un composant du véhicule à moteur (10) différent du dispositif d'éclairage (12),
- le composant représentant un système d'assistance au conducteur du véhicule à moteur (10), **caractérisé en ce qu'**une activation et/ou une désactivation du système d'assistance au conducteur est détectée en tant que paramètre (P1 ; P2 ; P3 ; P4),
- le système d'assistance au conducteur représentant une aide au suivi de voie, et
- un motif lumineux généré par le changement de la répartition de l'éclairement lumineux mettant sélectivement en évidence des zones sous la forme d'une accentuation latérale des bandes de signalisation.

2. Procédé selon la revendication 1,
**caractérisé en ce que**
plusieurs paramètres (P1 ; P2 ; P3 ; P4) sont détectés, lesquels paramètres caractérisent respectivement une situation, un changement associé de la répartition de l'éclairement lumineux ayant lieu pour chacun des paramètres.

3. Procédé selon la revendication 2,
**caractérisé en ce que**
un composant supplémentaire représente au moins l'un des éléments suivants :
- un système de direction du véhicule à moteur (10), un angle de braquage du système de direction étant détecté en tant que paramètre supplémentaire (P1 ; P2 ; P3 ; P4) ;
- un système de verrouillage du véhicule à moteur (10) pour un déverrouillage et un verrouillage des portières du véhicule à moteur, un verrouillage et/ou un déverrouillage du véhicule à moteur étant détecté en tant que paramètre supplémentaire (P1 ; P2 ; P3 ; P4) ;
- un moteur du véhicule à moteur (10), un démarrage et/ou un arrêt du moteur étant détecté en tant que paramètre supplémentaire (P1 ; P2 ; P3 ; P4) ;
- un système de propulsion du véhicule à moteur (10), une vitesse du véhicule à moteur étant détectée en tant que paramètre supplémentaire (P1 ; P2 ; P3 ; P4).

4. Procédé selon l'une des revendications 2 ou 3,
**caractérisé en ce que**
un paramètre supplémentaire (P1 ; P2 ; P3 ; P4) représente un paramètre (P1 ; P2 ; P3 ; P4) déterminé automatiquement par des moyens de détection (16) du véhicule à moteur (10) et concernant les abords du véhicule à moteur (10), la détermination du paramètre (P1 ; P2 ; P3 ; P4) ayant lieu en particulier de manière répétée au moins pendant une conduite du véhicule à moteur (10) à des intervalles de temps prédéterminés.

5. Procédé selon la revendication 4,
**caractérisé en ce que**
des moyens de détection (16) du véhicule à moteur (10) détectent lorsqu'un autre véhicule à moteur se trouve aux abords du véhicule à moteur (10), les moyens de détection (16) déterminant, lorsqu'un autre véhicule à moteur se trouve dans la zone proche du véhicule à moteur (10), une position de l'autre véhicule à moteur par rapport au véhicule à moteur (10), la position de l'autre véhicule à moteur étant transmise au dispositif de commande (14) en tant que paramètre supplémentaire (P1 ; P2 ; P3 ; P4).

6. Procédé selon la revendication 4 ou 5,
**caractérisé en ce que**
une information environnementale différente d'une détection d'un objet dans l'environnement du véhicule à moteur (10) est déterminée, l'information environnementale déterminée étant classée comme pertinente ou non pertinente selon un critère prédéterminé et, à condition que l'information environnementale soit classée comme pertinente, la classification de l'information environnementale du dispositif de commande (14) comme étant pertinente est transmise en tant que paramètre supplémentaire (P1 ; P2 ; P3 ; P4).

7. Procédé selon la revendication 6,
**caractérisé en ce que**
une température ambiante et/ou des données de navigation sont déterminées en tant qu'informations environnementales.

8. Procédé selon l'une des revendications précédentes,
**caractérisé en ce que**
le dispositif de commande (14), lors du passage de la première répartition de l'éclairement lumineux (B1 ; B2 ; B3 ; B4) à la au moins une seconde répartition de l'éclairement lumineux (B1 ; B2 ; B3 ; B4), la première répartition de l'éclairement lumineux (B1 ; B2 ; B3 ; B4) change en plusieurs secondes répartitions de l'éclairement lumineux (B1 ; B2 ; B3; B4) différentes, le changement étant prédéfini de manière fixe comme une séquence de gradation des sources de lumière à semi-conducteur respectives, qui définit en particulier une série temporelle de plusieurs secondes répartitions de l'éclairement lumineux (B1 ; B2 ; B3 ; B4).

9. Procédé selon l'une des revendications précédentes,
**caractérisé en ce que**
le paramètre (P1 ; P2 ; P3 ; P4) détermine la seconde répartition de l'éclairement lumineux (B1 ; B2 ; B3 ; B4) et, en cas de changement du paramètre (P1 ; P2 ; P3 ; P4), la seconde répartition de l'éclairement lumineux (B1 ; B2 ; B3 ; B4) est changée dynamiquement en fonction du changement du paramètre (P1 ; P2 ; P3 ; P4).

10. Dispositif d'éclairage (12) pour un véhicule à moteur (10), le dispositif d'éclairage (12) comportant une pluralité de sources de lumière à semi-conducteur et un dispositif de commande (14) destiné à commander les sources de lumière à semi-conducteur et étant conçu pour éclairer un avant proche du dispositif d'éclairage (12) au moins dans une zone proche (D) prédéterminée avec une première répartition de l'éclairement lumineux (B1 ; B2 ; B3 ; B4) prédéterminée, le dispositif d'éclairage (12) étant conçu pour fournir un feu de croisement qui s'étend dans une direction d'éclairage (L) au moins aussi loin ou plus loin que la zone proche (D), le dispositif de commande (14) étant conçu pour détecter automatiquement un paramètre (P1 ; P2 ; P3 ; P4) et changeant en fonction du paramètre (P1 ; P2 ; P3 ; P4) détecté, en commandant les sources de lumière à semi-conducteur, la première répartition de l'éclairement lumineux (B1 ; B2 ; B3 ; B4) au moins dans la zone proche (D) en au moins une seconde répartition de l'éclairement lumineux (B1 ; B2 ; B3 ; B4),
- le paramètre (P1 ; P2 ; P3 ; P4) concernant un état et/ou un changement d'état d'au moins un composant du véhicule à moteur (10) différent du dispositif d'éclairage (12),
- le composant représentant un système d'assistance au conducteur du véhicule à moteur (10) ;
- **caractérisé en ce que** le dispositif de commande (14) est conçu pour détecter une activation et/ou une désactivation du système d'assistance au conducteur en tant que paramètre,
- le système d'assistance au conducteur représentant une aide au suivi de voie, et
- un motif lumineux généré par le changement de la répartition de l'éclairement lumineux mettant sélectivement en évidence des zones sous la forme d'une accentuation latérale des bandes de signalisation.
